Europäisches Patentamt

European Patent Office

Office européen des brevets

(11) Veröffentlichungsnummer: **0 068 102**
**A1**

(12) # EUROPÄISCHE PATENTANMELDUNG

(21) Anmeldenummer: 82103621.7

(22) Anmeldetag: 28.04.82

(51) Int. Cl.³: **C 04 B 35/58, C 01 B 21/06, H 01 M 6/18**

(30) Priorität: 11.06.81 DE 3123094

(43) Veröffentlichungstag der Anmeldung: 05.01.83 Patentblatt 83/1

(84) Benannte Vertragsstaaten: **DE FR GB**

(71) Anmelder: **VARTA Batterie Aktiengesellschaft, Am Leineufer 51, D-3000 Hannover 21 (DE)**

(72) Erfinder: **Wagner, Armin, Im kleinen Grund 24, D-6233 Kelkheim 3 (DE)**

(74) Vertreter: **Kaiser, Dieter Ralf, Dipl.-Ing., Gundelhardtstrasse 72, D-6233 Kelkheim/Ts. (DE)**

(54) Verfahren zur Herstellung von keramischem Lithiumnitrid.

(57) Zur Herstellung von keramischem Lithiumnitrid als Festelektrolyt in galvanischen Lithiumzellen wird $Li_3N$-Pulver zunächst mit geschmolzenem Li-Metall, welches als Bindemittel dient, in einer Edelgasatmosphäre verrührt, die Mischung nach Abkühlen zu einem Formkörper verpreßt und der Formkörper darauf bei Temperaturen um 700 °C unter Stickstoff gesintert. Dabei setzt sich der Li-Binder ebenfalls zu $Li_3N$ um. Die Bindung mit Lithium macht das pulverige Ausgangsmaterial auch einer Walzbehandlung zugänglich, und aus dem duktilen Walzprodukt lassen sich Formkörper wie z.B. Tabletten mit großer Exaktheit ausstechen.

VARTA BATTERIE AKTIENGESELLSCHAFT
3000 HANNOVER 21, AM LEINEUFER 51


Verfahren zur Herstellung von keramischem
Lithiumnitrid

Die Erfindung betrifft ein Verfahren zur Herstellung von keramischem Lithiumnitrid, insbesondere zur Verwendung als Festelektrolyt in galvanischen Lithiumzellen.

Die besondere Eignung als Festelektrolyt in Lithium-Festkörperzellen oder auch als Separator in Zellen mit flüssigem Lithium verdankt das Lithiumnitrid seiner hohen $Li^+$-Ionenleitung und seiner hinreichenden Beständigkeit gegenüber elementarem Lithium. Allerdings müssen Luft und Feuchtigkeit streng ausgeschlossen bleiben.

Lithiumnitrid kann sowohl als Einzelkristall als auch polykristallin erhalten und eingesetzt werden.

Aus der DE-OS 27 50 607 ist es bekannt, aus polykristallinem $Li_3N$-Pulver durch Pressen unter hohem Druck und Sintern Keramikkörper herzustellen. Dieses Verfahren hat jedoch dort seine Grenzen, wo die fortgeschrittene Miniaturisierung der Batterien, z.B. für elektronische Armbanduhren, besonders kleine oder flache Bauelemente verlangt.

So darf z.B. die Höhe einer $Li_3N$-Festelektrolyt-Tablette nur einige zehntel mm betragen. Eine solche Tablette ist aus käuflichem $Li_3N$ nicht preßbar, da das Pulver erfahrungsgemäß teilweise am Preßstempel haften bleibt und dadurch Tabletten mit unregelmäßigen, meist tellerförmigen Kratern entstehen.

Der Erfindung liegt daher die Aufgabe zugrunde, für die Herstellung von Lithiumnitrid-Sinterkeramiken einen Weg anzugeben, welcher die genannte Schwierigkeit bei der Formgebung des Ausgangsmaterials umgeht.

Die Aufgabe wird erfindungsgemäß dadurch gelöst, daß die abgekühlte Mischung zu einem Formkörper verpreßt oder ausgewalzt wird und daß der Formkörper darauf in einem Stickstoffstrom gesintert wird.

Besonders vorteilhaft ist es, wenn zum Verrühren zu 2 Gew.Tln. $Li_3N$ 1 Gew.Tl. Li-Metall zugesetzt wird.

Die Mischung wird zweckmäßig in einem Molybdän- oder Wolframtiegel vorbereitet, wobei die Temperatur etwa 200°C - Li schmilzt bei 180°C - beträgt. Nach völliger Homogenisierung läßt man abkühlen und verpreßt die Mischung in die gewünschte Tablettenform bei einem Preßdruck zwischen 1 und 10 Kbar, vorzugsweise um 5 Kbar. Alle Operationen werden unter einem Edelgas, z.B. Argon, durchgeführt.

Die erhaltenen, jedoch noch unfertigen Formkörper - auch Grünlinge genannt - unterscheiden sich von gepreßten $Li_3N$-Tabletten herkömmlicher Art durch ihre einwandfreien Oberflächen, die selbst bei Schichtdicken von weniger als 0,3 mm keine Spuren von herausgerissenem Material aufweisen.

Die sonst im Grenzflächenbereich zwischen Tablettenoberfläche und Preßstempel wirksamen Adhäsionskräfte werden von der Bindekraft des anwesenden elementaren Lithiums offensichtlich überspielt. Das erfindungsgemäß verpreßte Material ist duktil und leicht bearbeitbar. Der Li-Binder erlaubt es sogar, die erfindungsgemäße Ausgangsmischung zu walzen und aus dem Walzprodukt kleine Tabletten oder sonstige Formkörper exakt auszustechen. Für eine Massenfertigung können sich daraus bedeutende Vorteile ergeben.

Zur Weiterverarbeitung werden die Grünlinge nunmehr in Molybdänschiffchen übergeführt, mit diesen in einen Röhrenofen verbracht und unter einem Stickstoffstrom bei Temperaturen zwischen 550 und 770°C, vorzugsweise bei 700 bis 750°C, der Sinterung unterworfen. Dabei ist es günstig, den Ofen zunächst für die Dauer einer Stunde nur auf Temperaturen zwischen 130 und 170°C, vorzugsweise auf 150°C, aufzuheizen. Durch diese Temperaturbehandlung wird die Reaktion des Li mit dem Stickstoff eingeleitet. Der eigentliche Sinterprozess nimmt etwa 1 1/2 Stunden in Anspruch.

Das abgekühlte Endprodukt ist von einheitlich graubrauner Farbe.

Untersuchungen der Leitfähigkeit haben ergeben, daß diese beim erfindungsgemäß hergestellten $Li_3N$ die gleiche ist wie bei konventionell gewonnenen $Li_3N$-Keramiken.

Der erfindungsgemäße Li-Zusatz zum $Li_3N$-Pulver erschöpft sich nicht allein in seiner Funktion als Binder, sondern er stellt zugleich ein besonders vorteilhaftes Sinterhilfsmittel dar. Das geschmolzene Li vermittelt nämlich einen guten Kontakt zwischen den $Li_3N$-Körnern und nimmt während des Aufnitrierens deren Kristallstruktur an. Die anwesenden $Li_3N$-Körner wirken als Kristallisationskeime auf die Reaktion stimulierend. Der Binder wandelt sich um in das eigentlich angestrebte Umsetzungsprodukt. Da reines $Li_3N$ eine Röntgendichte von 1,34 g/cm³, Li dagegen nur eine solche von 0,53 g/cm³ besitzt, ist mit dem Sinterprozess zugleich eine kontrahierende Wirkung des Bindemittels auf die $Li_3N$-Körner verbunden, indem das voluminöse Li durch die Umsetzung mit dem Stickstoff eine chemische Verdichtung erfährt. Als Festelektrolyt in galvanischen Lithiumzellen ist ein möglichst dichter bzw. porenfreier Sinterkörper gerade erwünscht. Die durch den Sintervorgang erzielte Enddichte von ca. 1,2 g/cm³ weicht von der idealen Röntgendichte nur verhältnismäßig wenig ab.

Reg.-Nr. 6 FP 383-DT                6233 Kelkheim, den 20.05.1981
                                    EAP-Ksr/th

VARTA BATTERIE AKTIENGESELLSCHAFT
3000 HANNOVER 21, AM LEINEUFER 51

Patentansprüche

1. Verfahren zur Herstellung von keramischem Lithiumnitrid, insbesondere zur Verwendung als Festelektrolyt in galvanischen Lithiumzellen, dadurch gekennzeichnet, daß $Li_3N$-Pulver unter einem Edelgas mit aufgeschmolzenem Li-Metall verrührt wird, daß die abgekühlte Mischung zu einem Formkörper verpreßt oder ausgewalzt wird und daß der Formkörper darauf in einem Stickstoffstrom gesintert wird.

2. Verfahren nach Anspruch 1, dadurch gekennzeichnet, daß das Mischungsverhältnis zwischen $Li_3$-N-Pulver und aufgeschmolzenem Li-Metall etwa 2 : 1 beträgt.

3. Verfahren nach den Ansprüchen 1 und 2, dadurch gekennzeichnet, daß der Preßdruck zwischen 1 und 10 Kbar, vorzugsweise um 5 Kbar beträgt.

4. Verfahren nach den Ansprüchen 1 bis 3, dadurch gekennzeichnet, daß der Preßling etwa 1 1/2 h bei 550 - 770°C, vorzugsweise bei 700 - 750°C gesintert wird.

5. Verfahren nach den Ansprüchen 1 bis 4, dadurch gekennzeichnet, daß der Formkörper vor dem Sintern etwa 1 h bei 130 bis 170°C, vorzugsweise bei ca. 150°C getempert wird.

**Europäisches Patentamt**

**EUROPÄISCHER RECHERCHENBERICHT**

0068102

Nummer der Anmeldung

EP 82 10 3621

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-2 866 685 (H.K.H. LAM) * Anspruch 1; Spalte 1, Zeilen 29-37; Spalte 2, Zeilen 8-11, 18-23 * | 1,2,4 | C 04 B 35/58 C 01 B 21/06 H 01 M 6/18 |
| | --- | | |
| Y | MATERIALS RESEARCH BULLETIN, Band 13, Nr.1, Januar 1978, Pergamon Press, (US) B.A. BOUKAMP et al.: "Fast ionic conductivity in lithium nitride", Seiten 23-32 * Seite 24 und 25 oben * | 1,3,4 | |
| | --- | | |
| A | CHEMICAL ABSTRACTS, Band 93, Nr.10, September 1980, Seite 210, Zusammenfassung Nr.98494g, Columbus, Ohio (US) & JP - A - 80 47 211 (TOKYO SHIBAURA ELECTRIC CO., LTD.) (3. April 1980) | 1 | |
| | --- | | **RECHERCHIERTE SACHGEBIETE (Int. Cl. 3)** |
| A | MATERIALS RESEARCH BULLETIN, Band 14, Nr.6, Juni 1979, Pergamon Press, (US) J.R. REA et al.: "Hich ionic conductivity in densified polycrystalline lithium nitride", Seiten 841-846 * Seiten 841-843, völlig * | 1,3,4 | C 04 B 35/00 C 01 B 21/00 H 01 M 6/00 |
| | --- | | |
| A | FR-A-2 429 263 (EBAUCHES S.A.) * Ansprüche 1,3-5; Seite 3, Zeilen 22-26 * | 1,4 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 29-09-1982 | SCHURMANS H.D.R. |